# EUROPÄISCHE PATENTSCHRIFT

(11) **EP 3 836 362 B1**
(45) Veröffentlichungstag und Bekanntmachung des Hinweises auf die Patenterteilung: **26.03.2025**
(21) Anmeldenummer: 20211397.3
(22) Anmeldetag: 03.12.2020
(51) Int. Cl.: H02K 3/28, H02K 3/12

(54) **STATOR MIT PINS FÜR EINE ELEKTRISCHE MASCHINE**
HAIRPIN WINDING OF A STATOR OF AN ELECTRIC MACHINE
ENROULEMEN EN ÉPINGLE À CHEVEUX D'UN STATOR D'UNE MACHINE ÉLECTRIQUE

(30) Priorität: 09.12.2019 DE 102019133549
(43) Veröffentlichungstag der Anmeldung: 16.06.2021
(73) Patentinhaber: Valeo eAutomotive Germany GmbH, 91056 Erlangen (DE)
(72) Erfinder: DOTZ, Boris, 81241 München (DE)

(56) Entgegenhaltungen:
- EP-A1- 3 096 441
- WO-A2-2012/072754
- DE-A1- 102010 053 719
- DE-T5- 112013 006 691
- US-A1- 2011 025 162
- US-B2- 9 136 738

## Beschreibung

Die Erfindung betrifft einen Stator mit Pins für eine elektrische Maschine, insbesondere einen Elektromotor.

### Stand der Technik

Elektrische Maschinen sind allgemein bekannt und finden als Elektromotor zunehmend Anwendung für den Antrieb von Fahrzeugen. Eine elektrische Maschine besteht aus einem Stator und einem Rotor.

Der Stator umfasst eine Vielzahl von Nuten, in welchen die Windungen geführt werden. Die Windungen können aus isolierten Kupferstäben, als sogenannte Pins gebildet werden. Der Rotor befindet sich im Stator und ist mit einer Rotorwelle verbunden.

Ein solcher Pin-, UPin- oder Hairpinmotor ist beispielsweise aus DE 11 2013 006 691 T5, DE 10 2010 053 719 A1, EP 3 096 441 A1, US 2011/0025162 A1, WO 2012/072754 A2 oder US 9,136,738 B2 bekannt.

### Aufgabe und Lösung

Aufgabe der vorliegenden Erfindung ist es, einen Stator nach Anspruch 1 mit Windungen aus Pins bereitzustellen, der einfach zu fertigen ist.

Erfindungsgemäß umfasst ein Stator für eine elektrische Maschine eine Vielzahl von Pins, die auf konzentrischen Kreisen mit unterschiedlichen Abständen zu einem Statormittelpunkt in Nuten im Stator angeordnet sind und jeder konzentrische Kreis einen Layer bildet, wobei jeweils vier Pins in unterschiedlichen Layer miteinander seriell verbunden sind und eine Windung bilden, ein erster Pin der Windung befindet sich in einer ersten Nut im 4n-3 Layer, wobei n eine natürliche Zahl ist, ein zweiter Pin der Windung befindet sich in einer zweiten Nut im 4n-2 Layer, wobei die zweite Nut einen ersten radialen Abstand in einer ersten Umfangsrichtung des Stators zu der ersten Nut aufweist, ein dritter Pin der Windung befindet sich in der ersten Nut im 4n Layer, ein vierter Pin der Windung befindet sich in der zweiten Nut im 4n-1 Layer.

Die Layer können von außen nach innen zum Statormittelpunkt aufsteigend nummeriert werden. Die natürlichen Zahlen umfassen nicht die Null.

Ein Stator mit der erfindungsgemäßen Wicklung lässt sich einfach herstellen und erzeugt ein effizientes elektromagnetisches Feldmit weniger Eisen- bzw. Ummagnetisierungsverlusten sowie eine bessere Ausnutzung des Eisenblechpaketes. Die Verbindungsarten stellen eine elektrisch leitfähige Verbindung zwischen den Pins in den Nuten her. Die Verbindungsart kann ein Anschweißen von Leitern an die Pins sein oder die Pins können bereits als Doppelpin, sogenannte Upins ausgebildet sein und dadurch bereits beim Einführen in den Stator eine Verbindung herstellen. Ferner stellt auch ein Verschweißen von zueinander gebogenen Endabschnitten von Pins eine Verbindungsart dar.

Erfindungsgemäß weist der Stator eine erste und zweite Stirnseite auf und sind der erste und zweite Pin auf der zweiten Stirnseite mittels einer ersten Verbindungsart miteinander, der zweite Pin und dritte Pin auf der ersten Stirnseite mittels einer zweiten Verbindungsart miteinander verbunden, der dritte Pin und vierte Pin auf der zweiten Stirnseite mittels einer dritten Verbindungsart miteinander verbunden, wobei sich die erste, zweite und dritte Verbindungsart voneinander unterscheiden.

Die unterschiedlichen Verbindungsarten ermöglichen eine verbesserte Fertigung. Eine abwechselnde Lage der Verbindungsarten auf verschiedenen Stirnseiten ermöglicht das effiziente Bilden einer Windung um die zwischen den Nuten liegenden Statorzähne. Die unterschiedlichen Verbindungsarten ermöglichen eine verbesserte Fertigung. Selbst Verbindungsarten auf derselben Stirnseite des Stators können sich durch unterschiedliche Biegerichtungen eines Pinfußes zum Statorinneren oder -äußeren unterscheiden.

Eine Kombination der vorher genannten Verbindungsarten auf unterschiedlichen oder gleichen Stirnseiten des Stators ist auch möglich. Durch eine gleiche Verbindungsart auf gleichen Stirnseiten und verschiedene Verbindungsarten auf unterschiedlichen Stirnseiten des Stators ist eine einfache und schnelle Fertigung möglich. Beispielsweise wird auf einer Stirnseite die Verbindung durch eine Art vorgebogene Pins, sogenannte Doppelpins oder auch Upins genannt, hergestellt und auf einer anderen Stirnseite des Stators werden Pins einzeln oder jeweils eine Seite des Doppelpins miteinander verschweißt. Die Schweißpunkte können an Füßen der Pins oder Doppelpins liegen.

Bevorzugt kann der Pin am Anfang einer Windung ein erster Endpin sein, wobei der erste Endpin als Einzelpin ausgestaltet ist. Ein Einzelpin ist beispielsweise ein IPin.

Gemäß der Erfindung weist der Stator zumindest zwei Windungen auf und ist zumindest der vierte Pin in der zweiten Nut mit einem fünften Pin im 4n-3 Layer in einer dritten Nut mittels einer vierten Verbindungsart verbunden.

Das mit einer solchen Windung erzeugte Drehfeld weist weniger störende Harmonische auf und hat dadurch weniger Torqueripple und kleinere Drehmomentschwankungen, sowie ein besseres NVH Verhalten.

Erfindungsgemäß liegt zwischen der zweiten Nut und der dritten Nut ein zweiter Abstand, der größer als der erste Abstand ist.

Ein Stator mit Windungen, die auf Nuten mit verschieden Abständen verteilt sind, weist weniger ohmsche AC Verluste und eine geringere Sättigung auf.

Gemäß der Erfindung weist der Stator eine Vielzahl von Windungen auf, die sich über den gesamten Umfang des Stators erstrecken und dabei eine Teilspule bilden.

Die Wicklungen weisen dadurch eine Symmetrie auf, welche ein gleichmäßiges Drehfeld erzeugt.

Weiter bevorzugt kann je ein Pin von zwei Teilspulen mittels einer fünften Verbindungsart oder einer sechsten Verbindungsart miteinander verbunden sein und eine Spule bilden. Bei diesen Pins kann es sich um sogenannte Endpins handeln, da sie das Ende einer Teilspule markieren.

In einer Ausgestaltung der Erfindung können die Endpins am Anfang oder Ende einer Spule als Einzelpins ausgestaltet sein.

Bevorzugt können vier Pins einer Spule vier Nuten komplett belegen.

Weiter bevorzugt können die Teilspulen sechs Spulen bilden und diesen derart drei Phasen zugeordnet sein, dass sich jeweils zwei Spulen, die einer gleichen Phase zugeordnet sind, in drei benachbarten Nuten befinden und dabei jeweils zwei unterschiedliche Layer der beiden äußeren Nuten mit Pins von anderen Phasen belegt sind.

In einer bevorzugten Ausgestaltung der Erfindung kann je ein Ein- und Ausgang der mindestens zwei Spulen miteinander verbunden und die zwei Spulen dadurch parallelgeschaltet und insbesondere einer Phase zugeordnet sein.

Weiter bevorzugt kann ein Eingang von mindestens zwei Spulen mittels einer siebten Verbindungsart miteinander verbunden sein.

Die siebte Verbindungsart kann durch einen an den Pins angebrachten Leiter oder durch einen leitenden Ring hergestellt werden.

Die beiden Spulen können parallel verbunden sein und können zusätzlich von einer gleichen Phase gespeist werden. Die Parallelverbindung kann durch das paarweise Verbinden von einem ersten und fünften oder vierten und achten Endpin erfolgen.

Ferner können jeweils zwei Phasen einen annährend identischen Strom- und Spannungsverlauf aufweisen und dadurch ein sechs Phaseninverter lediglich einen dreiphasigen Motor ansteuern. Mit dieser Anordnung ist eine Stromteilung der Schaltelemente im Inverter möglich.

Zwei Spulen in drei benachbarten Nuten können somit parallelgeschaltet und von einer Phase gespeist werden, sodass ein Stator mit Wicklungen für eine dreiphasige elektrische Maschine entsteht.

Erfindungsgemäß weist ein Fahrzeug eine elektrische Maschine mit einem Stator gemäß einer der bevorzugten Ausgestaltungen auf.

### Figurenbeschreibung

Figur 1 zeigt einen Stator.
Figur 2 zeigt einen Stator mit acht Nuten und vier Layer.
Figur 3 zeigt ein Wickelschema einer ersten Teilspule.
Figur 4 zeigt ein Wickelschema einer zweiten Teilspule.
Figur 5 zeigt einen Stator mit einer ersten und zweiten Teilspule und deren Verbindung miteinander und somit eine erste Spule.
Figur 6 zeigt ein Wickelschema einer weiteren Teilspule.
Figur 7 zeigt ein Wickelschema einer weiteren Teilspule.
Figur 8 zeigt einen Stator mit zwei weiteren Teilspulen und deren Verbindung miteinander und somit eine zweite Spule.
Figur 9 zeigt einen Stator mit zwei Spulen, bestehend aus jeweils zwei Teilspulen.
Figur 10 zeigt einen Stator mit zwei weiteren Spulen.
Figur 11 zeigt einen Stator mit zwei weiteren Spulen.
Figur 12 zeigt einen Stator mit sechs Spulen.
Figur 13 zeigt ein Wickelschema einer ersten und zweiten Spule.
Figur 14 zeigt ein Fahrzeug mit einer elektrischen Maschine, insbesondere einen Elektromotor mit einem Stator mit einem Inverter.

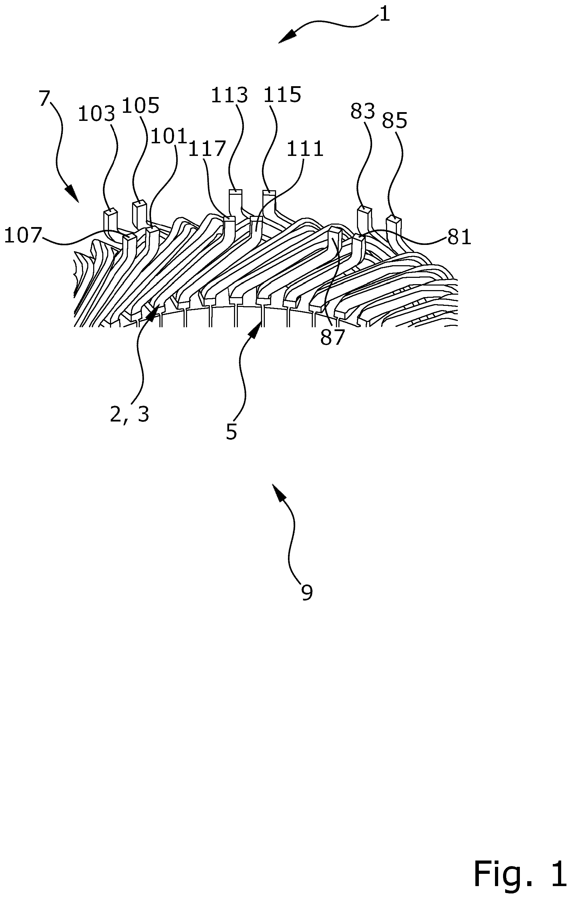

Figur 1 zeigt einen Stator 1 mit einer Vielzahl an Nuten 5 in welchen Pins 2, 3 geführt werden. Der Stator 1 weist eine erste Stirnseite 7 und eine gegenüberliegende zweite Stirnseite 9 auf. Auf der ersten Stirnseite 7 sind Eingänge 81, 87, 101, 107, 111, 117 und Ausgänge 83, 85, 103, 105, 113, 115 von Teilspulen zum Anschluss der Pins an eine Energiequelle zum Betrieb der elektrischen Maschine gezeigt. Selbstverständlich ist zum Betrieb einer elektrischen Maschine ferner ein Rotor nötig. Die Pins zum Anschluss liegen dicht beieinander und ermöglichen kurze Anschlussleitungen.

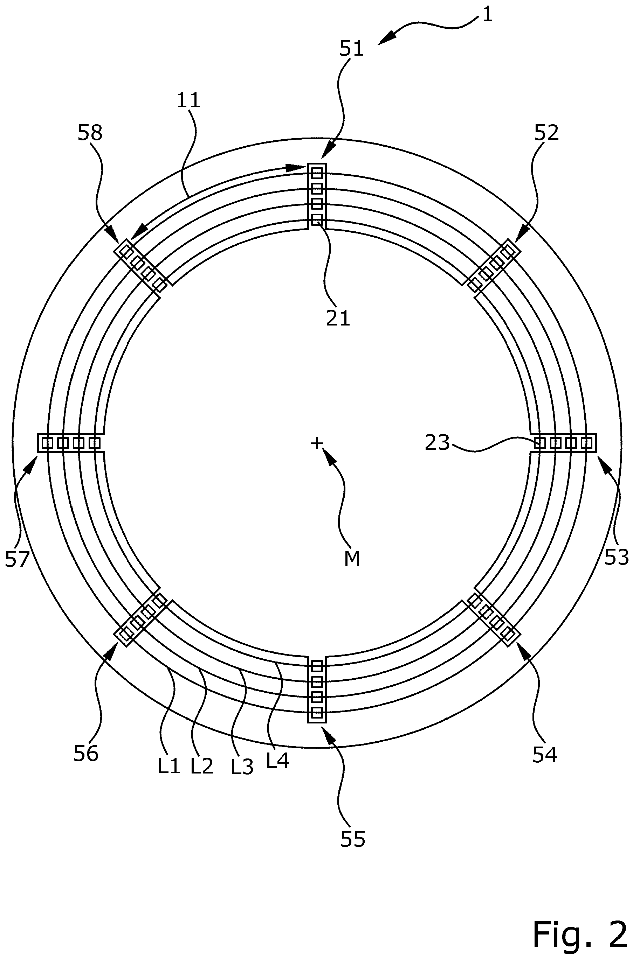

Figur 2 zeigt einen Stator 1 mit Nuten und Pins auf vier Layer, wobei lediglich acht Nuten 51, 52, 53, 54, 55, 56, 57, 58 dargestellt sind. In den Nuten 51, 52, 53, 54, 55, 56, 57, 58 sind Pins 21, 23 angeordnet. Die Pins 21, 23 liegen nebeneinander in einer Nut. Im Beispiel der Figur 2 liegen vier Pins nebeneinander in einer Nut. Die vier Pins innerhalb einer Nut liegen somit auf unterschiedlichen konzentrischen Kreisen L1, L2, L3, L4 um den Mittelpunkt M des Stators, die somit einzelne Layer bilden. Zwischen jeweils zwei Nuten liegt ein Standardabstand 11. Dieser Standardabstand 11 ist zwischen allen in Figur 2 gezeigten Nuten identisch.

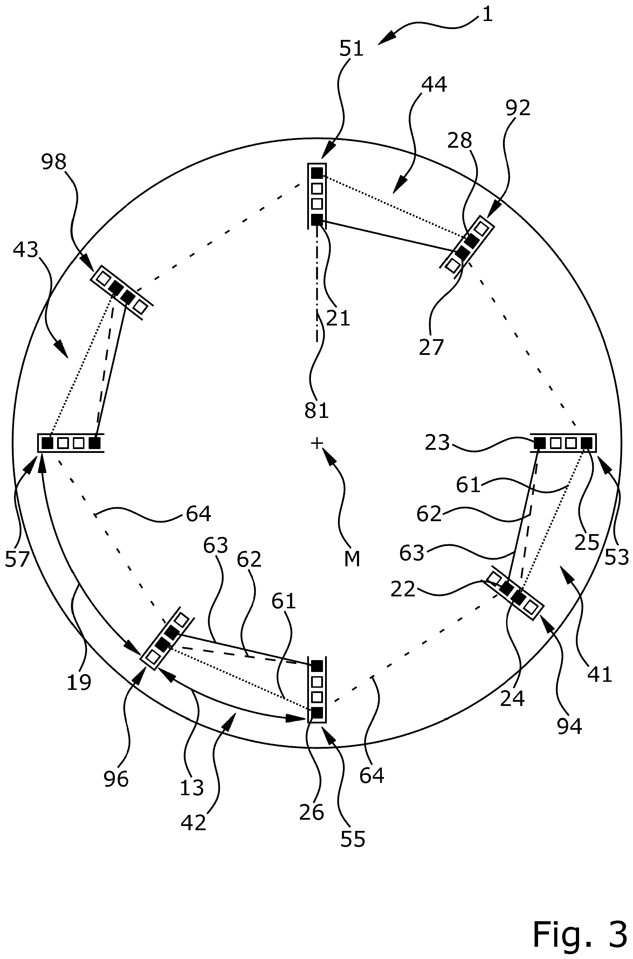

Figur 3 zeigt den Stator 1 aus Figur 2. Die Pins sind weiterhin auf konzentrischen Kreisen, also Layer, angeordnet, wobei die konzentrischen Kreise wegen einer besseren Darstellung nicht eingezeichnet sind. In Figur 3 ist dargestellt, welche Pins miteinander in Serie verbunden sind. Ein Pin 21, der auch gleichzeitig ein erster Endpin ist und einen Eingang 81 aufweist, befindet sich in einer Nut 51 im Layer L4. Bei diesem ersten Endpin handelt es sich beispielsweise um einen Einzelpin, der als IPin ausgestaltet ist.

Der Pin 21 ist mittels einer dritten Verbindungsart 63, als durchgezogene Linie dargestellt, mit einem Pin 27 in einer Nut 92 verbunden. Der Pin 27 befindet sich im Layer L3. Der Pin 22 ist mittels einer vierten Verbindungsart 64, als kurz gestrichelte Linie dargestellt, mit einem ersten Pin 25 in einer ersten Nut 53 verbunden. Der erste Pin 25 liegt im Layer L1.

Der erste Pin 25 ist über eine erste Verbindungsart 61, als gepunktete Linie dargestellt, mit einem zweiten Pin 24 verbunden. Der zweite Pin 24 liegt in einer zweiten Nut 94. Zwischen der ersten Nut 53 und der zweiten Nut 94 liegt ein erster Abstand 13, der um eine Nut kleiner als der Standardabstand 11 aus Figur 2 ist. Der zweite Pin 24 liegt im Layer L2.

Der zweite Pin 24 ist mittels einer zweiten Verbindungsart 62, als gestrichelte Linie dargestellt, mit einem dritten Pin 23 in der ersten Nut 53 verbunden. Der dritte Pin 23 liegt im Layer L4. Zwischen dem ersten Pin 25 und dem dritten Pin 23 in der ersten Nut 53 ist somit noch Platz für zwei weitere Pins.

Der dritte Pin 23 ist mittels einer dritten Verbindungsart 63, als durchgezogene Linie dargestellt, mit einem vierten Pin 22 in der zweiten Nut 94 verbunden. Der vierte Pin 22 liegt im Layer L3. Der zweite Pin 24 und der vierte Pin 22 liegen in der Mitte der Nut, sodass auf dem Stator inneren Layer L4 und dem Stator äußeren Layer L1 noch Platz für zwei weitere Pins ist.

Die Verbindung des ersten, zweiten, dritten und vierten Pins bildet eine erste Windung 41.

Der vierte Pin 22 ist über die vierte Verbindungsart 64 mit einem fünften Pin 26 in einer dritten Nut 55 verbunden. Zwischen der zweiten Nut 94 und der dritten Nut 55 liegt ein zweiter Abstand 19, der eine Nut kürzer als der Standardabstand 11 ist. Der fünfte Pin 26 liegt im Layer L1. Mit dem fünften Pin 26 beginnt die vorher beschriebene serielle Verbindung der im Stator nachfolgenden Pins erneut, wobei der fünfte Pin 26 ähnlich zum ersten Pin 25 mit einem Versatz der Nut um 90 Grad ist.

Die serielle Verbindung des fünften Pins 26 mit weiteren Pins in einer weiteren Nut 96 bildet eine zweite Windung 42. Die erste, zweite und dritte Verbindungsart 61, 62, 63 zwischen diesen Pins ist identisch zu der jeweiligen ersten, zweiten und dritten Verbindungsart 61, 62, 63 der Pins der ersten Windung 41.

Die beiden Windungen 41, 42 sind durch die vierte Verbindungsart 64 verbunden. Durch die Fortsetzung der seriellen Verbindung wird die dritte Windung 43 in zwei weiteren Nuten 57 und 98 gebildet. Die Windungen 41, 42, 43 sind jeweils mit der vierten Verbindungsart 64 verbunden. Die vierte Verbindungsart 64 zwischen den jeweiligen Windungen ist somit identisch. Auch die erste, zweite und dritte Verbindungsart 61, 62, 63 zwischen den Pins der Windung 43 ist identisch zu der ersten, zweiten und dritten Verbindungsart 61, 62, 63 der ersten und zweiten Windung 41, 42.

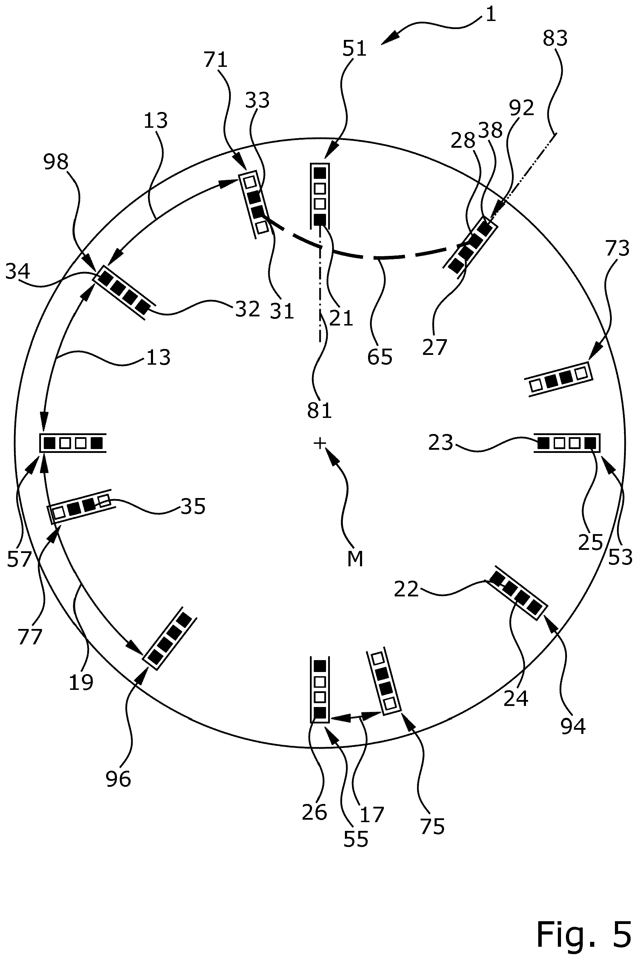

Die vierte Windung 44 ist auch über die vierte Verbindungsart 64 mit der dritten Windung 43 verbunden, jedoch fehlt dieser Windung eine Verbindung der zweiten Verbindungsart. Der Pin 28 stellt einen zweiten Endpin dar und die Windung 44 entsteht gemäß Figur 5 und wird dort beschrieben.

Die vier Windungen 41, 42, 43, 44 bilden durch einen Umlauf um den Stator 1 mit dem Uhrzeigersinn eine erste Teilspule. Der erste Endpin 21 weist einen Eingang 81 für den Anschluss einer Energiequelle auf. Die Teilspule endet mit dem zweiten Endpin 28 der Windung 44.

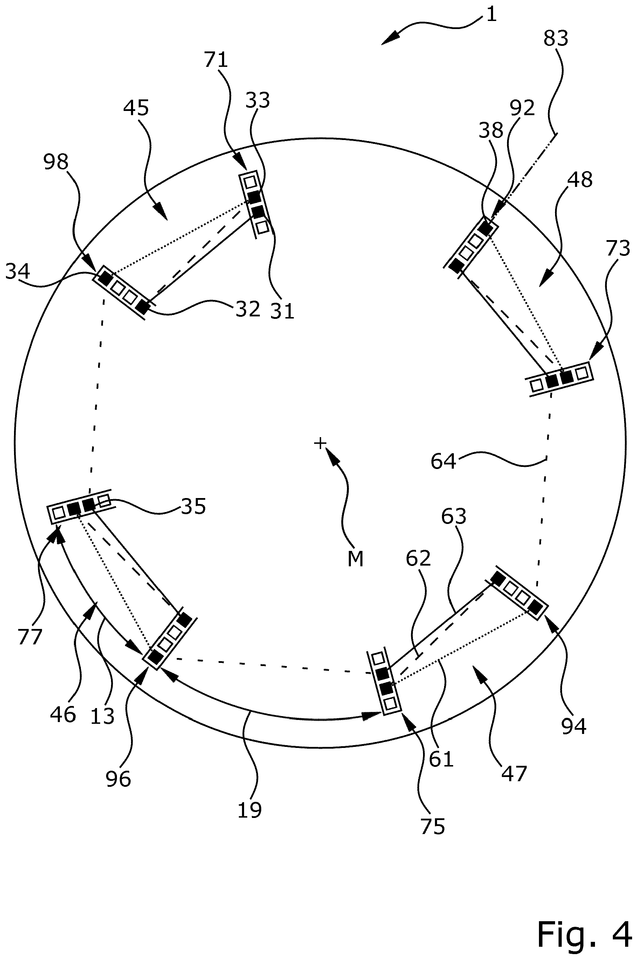

Figur 4 zeigt einen Stator 1, wobei dort acht Nuten 71, 73, 75, 77, 92, 94, 96, 98 gezeigt sind.

Die Pins 31, 32, 33, 34, 35, 38 sind in gleicher Weise wie die Pins 22, 23, 24, 25, 26, 28 der Figur 3 verbunden. Selbst die Verbindungsart ist identisch zu Figur 3 und durch die gleichen Bezugszeichen deutlich gemacht. In gleicher Weise wie bei Figur 3 beschrieben, werden die Windungen 45, 46, 47, 48 gebildet und sind miteinander durch die vierte Verbindungsart 64 verbunden.

Die vier Windungen 45, 46, 47, 48 bilden durch einen Umlauf um den Stator 1 entgegen den Uhrzeigersinn eine zweite Teilspule. Die Teilspule beginnt mit einem Pin 31, der ein dritter Endpin ist. Die Teilspule endet mit dem Pin 38 der Windung 48. Der letzte Pin 38 der Windung 48 stellt somit einen vierten Endpin dar. Der vierte Endpin 38 weist ferner einen Ausgang 83 für den Anschluss einer Energiequelle auf. Selbstverständlich können Eingang und Ausgang auch vertauscht werden.

Figur 5 zeigt eine Pinbelegung durch die erste und zweite Teilspule aus Figur 3 und 4, welche durch schwarze Vierecke dargestellt sind. Gleiche Bezugszeichen bezeichnen gleiche Pins, Nuten, Verbindungen in den Figuren. Der zweite Endpin 28 der vierten Windung 44 der ersten Teilspule in Nut 92, Layer L2, und der dritte Endpin 31 der ersten Windung 45 der zweiten Teilspule in Nut 71, Layer L3, sind mit einer fünften Verbindungsart 65 verbunden. Diese Verbindung bildet die vierte Windung 44, die in der Beschreibung der Figur 3 erwähnt ist. Die fünfte Verbindungsart 65 überbrückt den zweiten Abstand 19.

Die zwei Teilspulen bilden somit eine erste Spule 201 mit einem Eingang 81 und einem Ausgang 83 nach zweimaligem radialen Umlauf um den Stator mit jeweils unterschiedlichen Richtungen. Ein in der Figur dargestellter dritter Abstand 17 ist eine Nut lang.

Die Pins der Spule 201 belegen bei vier Nuten 92, 94, 96, 98 alle Layer. Diese vier Nuten 92, 94, 96, 98 sind jeweils um 90 Grad verdreht und weisen zweimal den Standardabstand, bzw. die Summe aus dem ersten Abstand 13 und dem zweiten Abstand 19 auf.

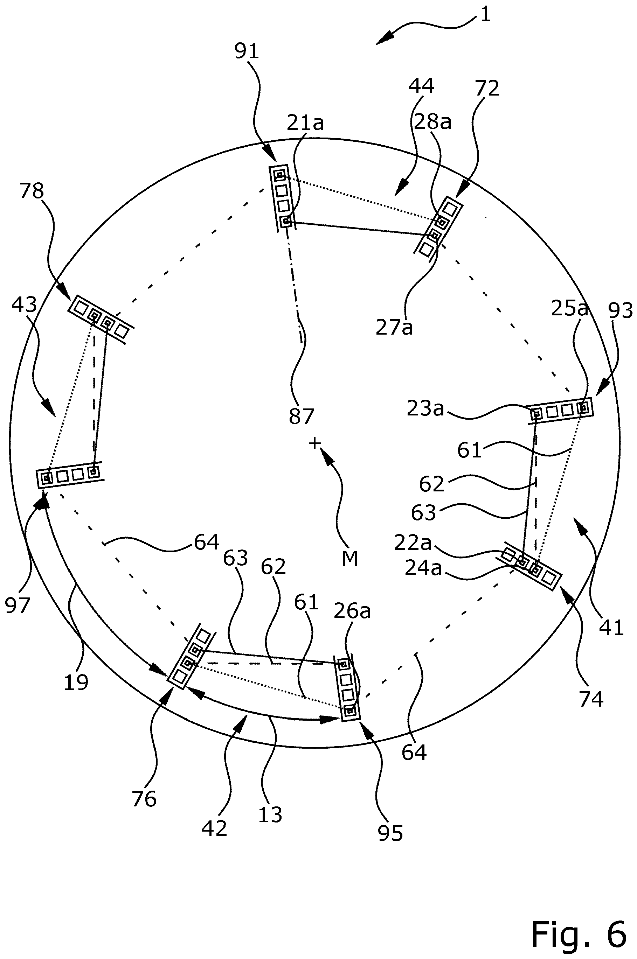

Figur 6 zeigt einen Stator 1. Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine erste Teilspule einer zweiten Spule 202 bilden. Ein fünfter Endpin 21a befindet sich in der Nut 91 im Layer L4. Dieser fünfte Endpin 21a ist mittels der dritten Verbindungsart 63, als durchgezogene Linie dargestellt, mit einem Pin 27a in einer Nut 72 verbunden. Der Pin 27a befindet sich im Layer L3. Der Pin 26a ist mittels der vierten Verbindungsart 64, als kurz gestrichelte Linie dargestellt, mit einem ersten Pin 25a im Layer L1 in einer ersten Nut 93 verbunden.

Der erste Pin 25a ist über eine erste Verbindungsart 61, als gepunktete Linie dargestellt, mit einem zweiten Pin 24a verbunden. Der zweite Pin 24a liegt in einer zweiten Nut 74. Zwischen der ersten Nut 93 und der zweite Nut 74 liegt ein erster Abstand 13, der um eine Nut kleiner als der Standardabstand 11 aus Figur 2 ist. Der zweite Pin 24a liegt im Layer L2.

Der zweite Pin 24a ist mittels einer zweiten Verbindungsart 62, als gestrichelte Linie dargestellt, mit einem dritten Pin 23a in der ersten Nut 93 verbunden. Der dritte Pin 23a liegt im Layer L4. Zwischen dem ersten Pin 25a und dem dritten Pin 23a in der ersten Nut 93 ist somit noch Platz für zwei weitere Pins.

Der dritte Pin 23a ist mittels einer dritten Verbindungsart 63, als durchgezogene Linie dargestellt, mit einem vierten Pin 22a in der zweiten Nut 74 verbunden. Der vierte Pin 22a liegt im Layer L3. Der zweite Pin 24a und der vierte Pin 22a liegen in der Mitte der zweiten Nut 74, sodass auf dem Stator inneren Layer L4 und dem Stator äußeren Layer L1 noch Platz für zwei weitere Pins ist.

Die Verbindung des ersten, zweiten, dritten und vierten Pins bildet eine erste Windung 41.

Der vierte Pin 22a ist über die vierte Verbindungsart 64 mit einem fünften Pin 26a in einer dritten Nut 95 verbunden. Zwischen der zweiten Nut 74 und der dritten Nut 95 liegt ein zweiter Abstand 19, der eine Nut länger als der Standardabstand 11 ist. Der fünfte Pin 26a liegt in Layer L1. Mit dem fünften Pin 26a beginnt die vorher beschriebene serielle Verbindung der im Stator nachfolgenden Pins erneut, wobei der fünfte Pin 26a ähnlich zum ersten Pin 25a mit einem Versatz der Nut um 90 Grad versehen ist.

Die serielle Verbindung des fünften Pins 26a mit weiteren Pins in einer weiteren Nut 76 bildet eine zweite Windung 42. Die erste, zweite und dritte Verbindungsart 61, 62, 63 zwischen diesen Pins ist identisch zu der jeweiligen ersten, zweiten, dritten Verbindungsart 61, 62, 63 der Pins der ersten Windung 41.

Die beiden Windungen 41, 42 sind durch die vierte Verbindungsart 64 verbunden. Durch die Fortsetzung der seriellen Verbindung wird die dritte Windung 43 in zwei weiteren Nuten 97 und 78 gebildet. Die Windungen 41, 42, 43 sind jeweils mit der vierten Verbindungsart 64 verbunden. Die vierte Verbindungsart 64 zwischen den jeweiligen Windungen ist somit identisch. Auch die erste, zweite und dritte Verbindungsart 61, 62, 63 zwischen den Pins der Windung 43 ist identisch zu der ersten, zweiten und dritten Verbindungsart 61, 62, 63 der ersten und zweiten Windung 41, 42.

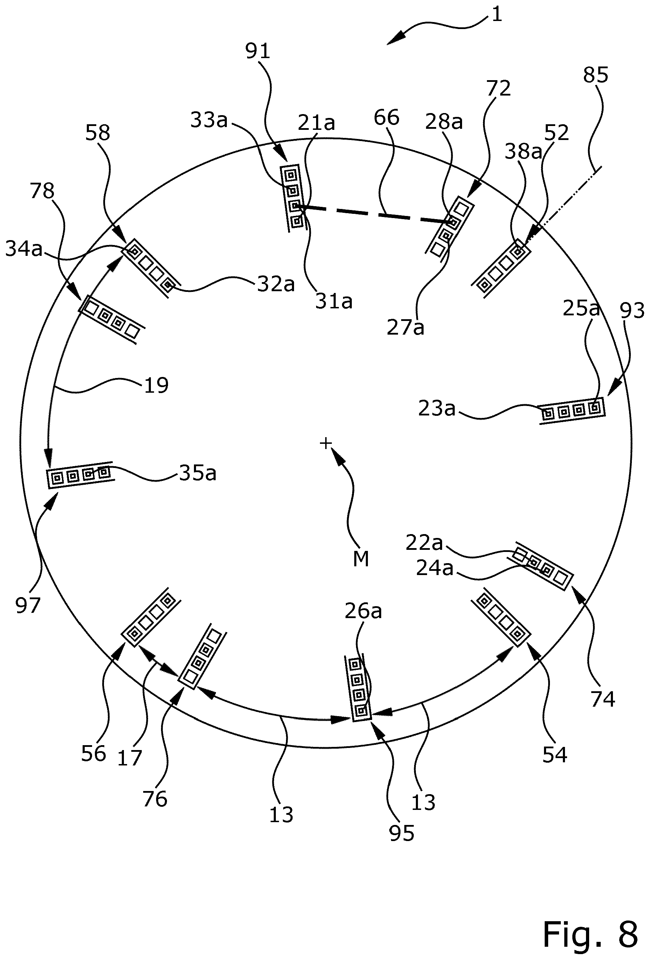

Die vierte Windung 44 ist auch über die vierte Verbindungsart 64 mit der dritten Windung 43 verbunden, jedoch fehlt dieser Windung eine Verbindung der zweiten Verbindungsart. Der Pin 28a stellt einen sechsten Endpin dar und die Windung 44 entsteht gemäß Figur 8 und wird dort beschrieben.

Die vier Windungen 41, 42, 43, 44 bilden durch einen Umlauf um den Stator 1 mit dem Uhrzeigersinn eine erste Teilspule. Der fünfte Endpin 21a weist einen Eingang 87 für den Anschluss einer Energiequelle auf. Die Teilspule endet mit dem sechsten Endpin 28a der Windung 44.

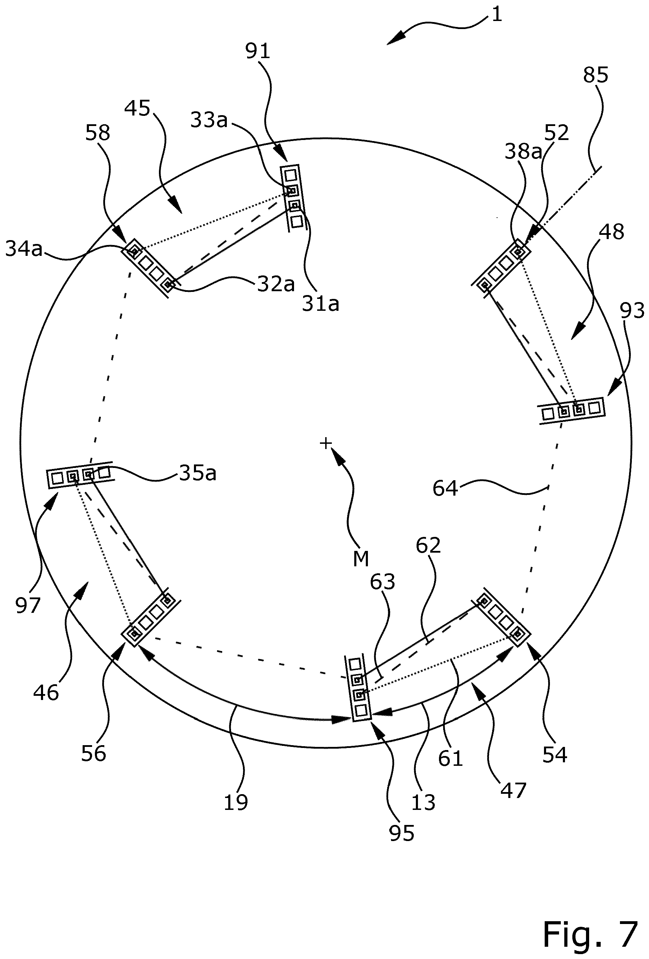

Figur 7 zeigt einen Stator 1, wobei dort acht Nuten 52, 54, 56, 58, 91, 93, 95, 97 gezeigt sind.

Die Pins sind weiterhin auf konzentrischen Kreisen, also Layer, angeordnet, wobei die konzentrischen Kreise wegen einer besseren Darstellung nicht eingezeichnet sind. Es ist dargestellt, welche Pins, als schwarze Vierecke auf weißem Grund dargestellt, miteinander in Serie verbunden sind und eine zweite Teilspule einer zweiten Spule 202 bilden.

Die Pins 31a, 32a, 33a, 34a, 35a, 38a sind in gleicher Weise wie die Pins 22a, 23a, 24a, 25a, 26a, 28a der Figur 6 verbunden. Selbst die Verbindungsart ist identisch zu Figur 6 und durch die gleichen Bezugszeichen deutlich gemacht. In gleicher Weise wie bei Figur 6 beschrieben, werden die Windungen 45, 46, 47, 48 gebildet und sind miteinander durch die vierte Verbindungsart 64 verbunden.

Die vier Windungen 45, 46, 47, 48 bilden durch einen Umlauf um den Stator 1 entgegen dem Uhrzeigersinn eine zweite Teilspule. Die Teilspule beginnt mit einem Pin 31a, der ein siebter Endpin ist. Die Teilspule endet mit dem Pin 38a der Windung 48. Der letzte Pin 38a der Windung 48 stellt somit einen achten Endpin dar. Der achte Endpin 38a weist ferner einen Ausgang 85 für den Anschluss einer Energiequelle auf. Selbstverständlich können Eingang und Ausgang auch vertauscht werden.

Figur 8 zeigt eine Pinbelegung durch die beiden Teilspulen aus Figur 6 und 7, welche durch schwarze Vierecke auf weißem Grund dargestellt sind. Gleiche Bezugszeichen bezeichnen gleiche Pins, Nuten und Verbindungen in den Figuren.

Der sechste Endpin 28a der vierten Windung 44 der ersten Teilspule in Nut 72, Layer L2, und der siebte Endpin 31a der ersten Windung 45 der zweiten Teilspule in Nut 91, Layer L3, sind mit einer sechsten Verbindungsart 66 verbunden. Diese Verbindung bildet die vierte Windung 44, die in der Beschreibung der Figur 6 erwähnt ist. Die sechste Verbindungsart 66 überbrückt den ersten Abstand 13.

Die zwei Teilspulen bilden somit eine zweite Spule 202 mit einem Eingang 87 und einem Ausgang 85 nach zweimaligem radialen Umlauf um den Stator mit jeweils unterschiedlichen Richtungen. Ein in der Figur dargestellter dritter Abstand 17 ist eine Nut lang.

Die Pins der Spule 202 belegen bei vier Nuten 91, 93, 95, 97 alle Layer. Diese vier Nuten sind jeweils um 90 Grad verdreht und weisen zweimal den Standardabstand bzw. die Summe aus dem ersten Abstand 13 und dem zweiten Abstand 19 auf.

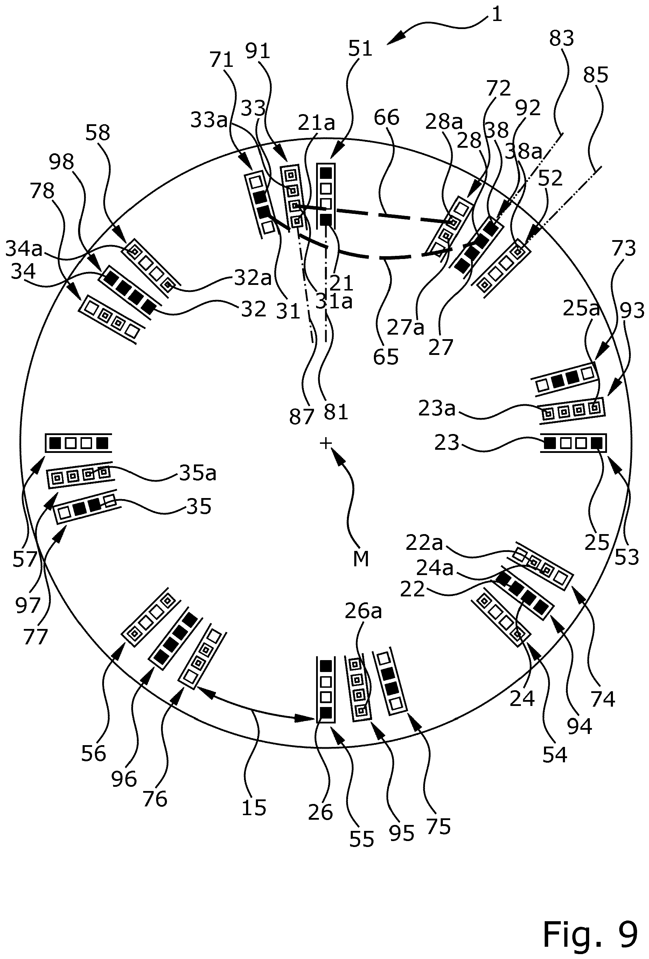

Figur 9 zeigt eine Pinbelegung durch die erste Spule 201 aus Figur 5, welche durch schwarze Vierecke dargestellt ist. Gleiche Bezugszeichen bezeichnen gleiche Pins, Nuten und Verbindungen in den Figuren. Ferner ist die zweite Spule aus der Figur 8 als schwarze Vierecke auf weißem Grund dargestellt. Die Teilspulen der beiden Spulen sind mit der fünften Verbindungsart 65 (erste Spule) oder der sechsten Verbindungsart 66 (zweite Spule) verbunden. Die fünfte Verbindungsart 65 überbrückt den zweiten Abstand 19. Die sechste Verbindungsart 66 überbrückt den ersten Abstand 13. Die Pins der beiden Spulen liegen in jeweils drei benachbarten Nuten. Zwischen den jeweils äußeren Nuten der drei benachbarten Nuten befindet sich ein dritter Abstand 15, der zwei Nuten kürzer als der Standardabstand 11 ist.

Es sind somit zwei parallele Spulen gezeigt, die jeweils aus zwei Teilspulen bestehen. Ebenfalls sind die Ein- und Ausgänge der Spulen gezeigt. Der Eingang 81 der ersten Spule befindet sich an der Nut 51 und der Ausgang 83 an der Nut 92. Der Eingang 87 der zweiten Spule befindet sich an der Nut 91 und der Ausgang 85 an der Nut 52. Die Ein- und Ausgänge beider Spulen liegen somit in benachbarten Nuten.

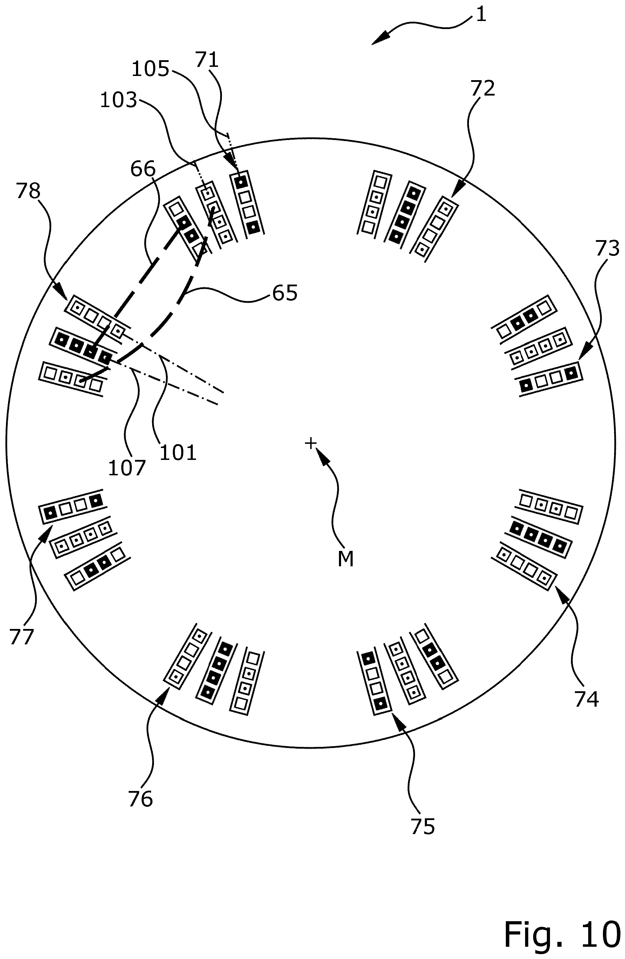

Figur 10 zeigt eine Pinbelegung durch eine dritte und vierte Spule in den schwarzen Vierecken mit weißem Punkt und den weißen Vierecken mit schwarzem Punkt. Diese entsteht durch ein aus den Figuren 3, 4, 5, 6, 7, 8 bekanntes Wickelschema, welches um je acht Nuten entgegen dem Uhrzeigersinn im Vergleich zu den dort dargestellten Pins und Verbindungen der Teilspulen versetzt ist.

Ebenfalls sind die Ein- 101 und Ausgänge 103 der dritten Spule und Ein- 107 und Ausgänge 105 der vierten Spule gezeigt. Die Ein- und Ausgänge beider Spulen liegen somit in benachbarten Nuten.

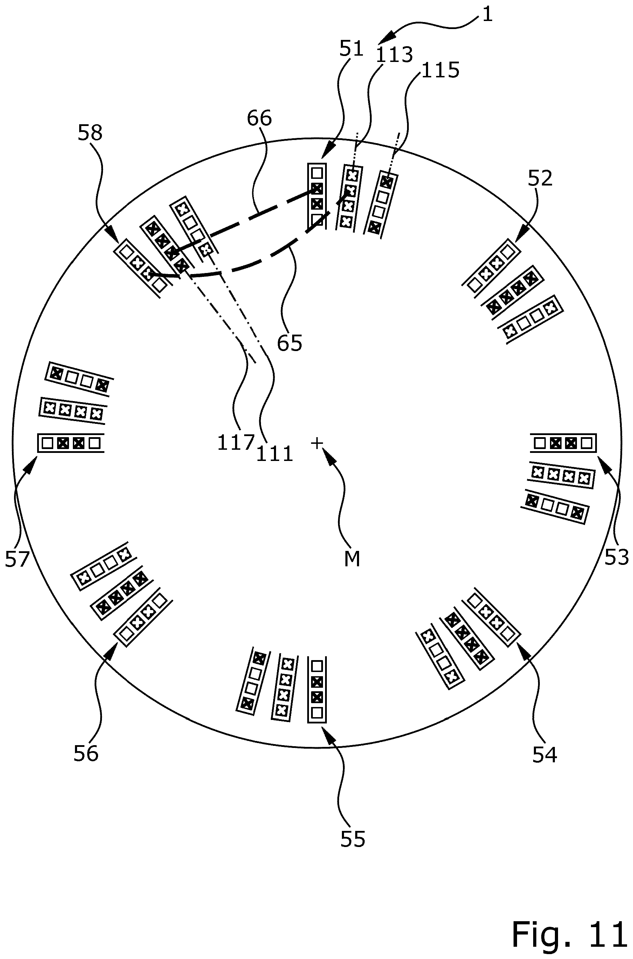

Figur 11 zeigt eine Pinbelegung durch eine fünfte und sechste Spule in den schwarzen Vierecken mit weißem Kreuz und den weißen Vierecken mit schwarzem Kreuz. Diese entsteht durch ein aus den Figuren 3, 4, 5, 6, 7, 8 bekanntes Wickelschema, welches um vier Nuten entgegen den Uhrzeigersinn im Vergleich zu den dort dargestellten Pins und Verbindungen der Teilspulen versetzt ist. Ebenfalls sind die Ein- 111 und Ausgänge 113 der fünften Spule und Ein- 117 und Ausgänge 115 der sechsten Spule gezeigt. Die Ein- und Ausgänge beider Spulen liegen somit in der jeweils gleichen Nut.

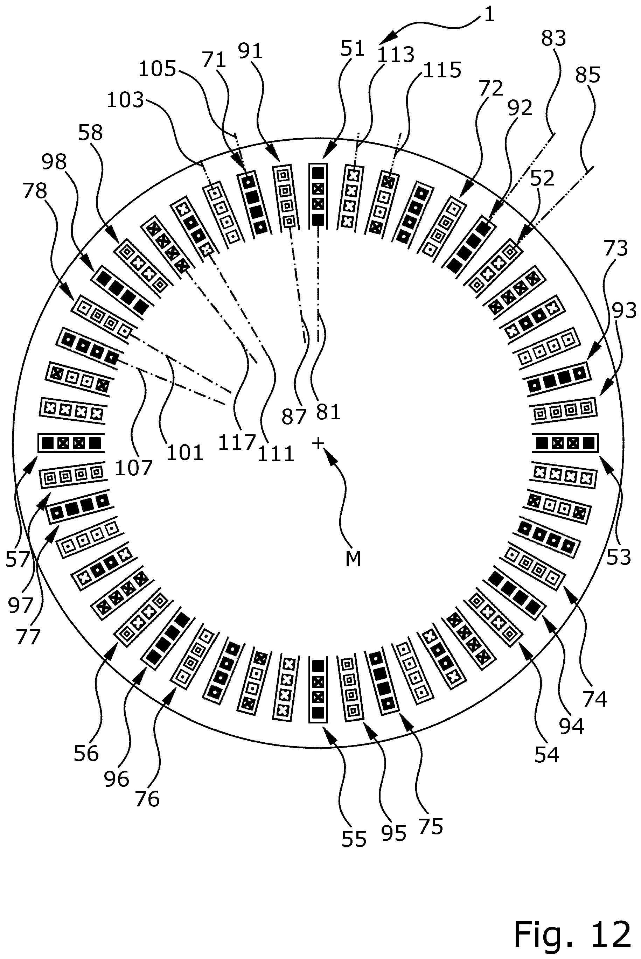

Figur 12 zeigt eine Pinbelegung durch die sechs Spulen als eine Kombination aus den Figuren 9, 10 und 11. Insbesondere aus der Lage der Ein- 81, 87, 101, 107, 111, 117 und Ausgänge 83, 85, 103, 105, 113, 115 wird ersichtlich, dass eine Verschaltung der Spulen innerhalb von 16 Nuten erfolgen kann. Bei dem exemplarisch dargestellten Stator mit achtundvierzig Nuten ist eine Verschaltung der Ein- und Ausgänge somit innerhalb von einem Drittel des Statorumfangs möglich. Rein bezogen auf die Ein- oder Ausgänge, wäre eine getrennte Beschaltung innerhalb von zehn Nuten möglich.

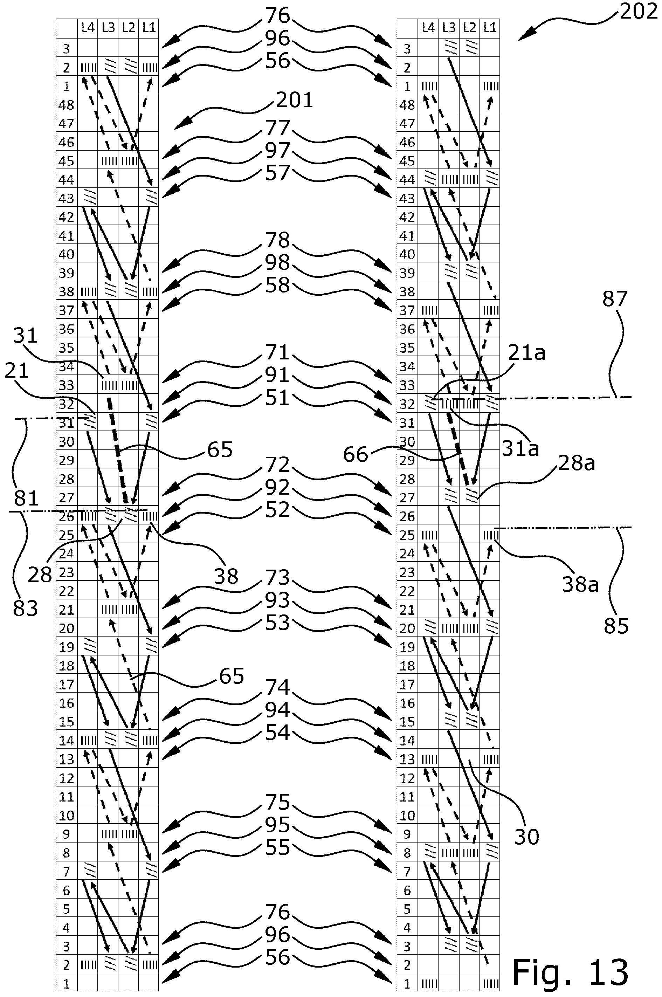

Figur 13 zeigt das Wickelschema der zwei Teilspulen der ersten Spule 201 und zweiten Spule 202. Die fortlaufende "Nutennummer" ist kein Bezugszeichen. Die Bezugszeichen mit Pfeil an den Nuten sind identisch zu den vorherigen Figuren und ermöglichen einen Vergleich mit diesen Figuren.

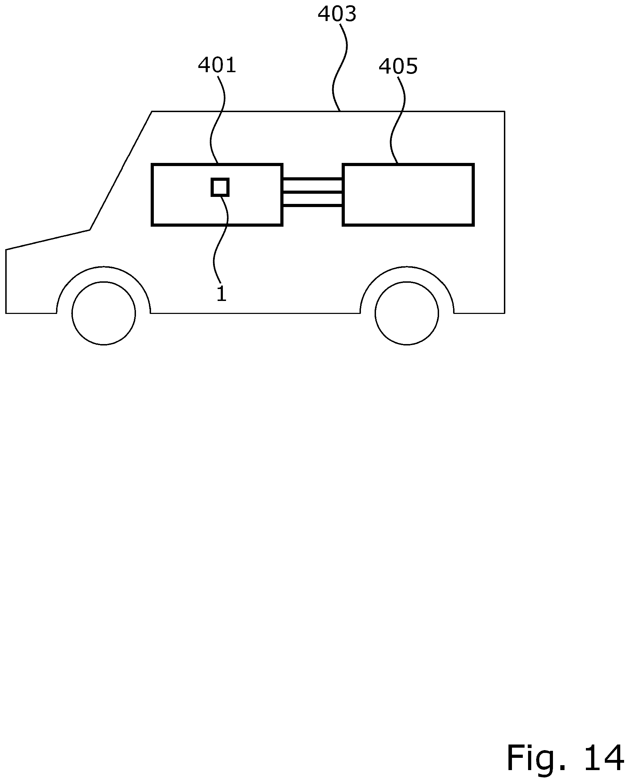

Figur 14 ist eine Prinzipskizze eines Ausführungsbeispiels eines Fahrzeugs 403, beispielsweise eines Hybridfahrzeugs oder eines Elektrofahrzeugs, umfassend eine elektrische Maschine 401, insbesondere einen Elektromotor, mit einem Ausführungsbeispiel des Stators 1 zum Antreiben des Fahrzeugs 403. Ferner kann das Fahrzeug 403 einen Inverter 405 aufweisen, der die elektrische Maschine 401 mit einem Wechselstrom aus einer Gleichstromquelle versorgt.

### Bezugszeichenliste

- 1: Stator
- 2, 3: Pin
- 7: erste Stirnseite
- 9: zweite Stirnseite
- 11: Standardabstand
- 13: erster Abstand
- 17: dritter Abstand
- 19: zweiter Abstand
- 21: erster Endpin
- 28: zweiter Endpin
- 31: dritter Endpin
- 38: vierter Endpin
- 21a: fünfter Endpin
- 28a: sechster Endpin
- 31a: siebter Endpin
- 38a: achter Endpin
- 22 - 27, 22a - 27a: Pins
- 32 - 37, 32a - 37a: Pins
- 41 - 48: Windung
- 51 - 58: Nuten
- 61: erste Verbindungsart
- 62: zweite Verbindungsart
- 63: dritte Verbindungsart
- 64: vierte Verbindungsart
- 65: fünfte Verbindungsart
- 66: sechste Verbindungsart
- 71 - 78: Nuten
- 81, 87, 101, 107, 111, 117: Eingang
- 83, 85, 103, 105, 113, 115: Ausgang
- 91 - 98: Nuten
- 201: erste Spule
- 202: zweite Spule
- 401: elektrische Maschine
- 403: Fahrzeug
- 405: Inverter
- L1, L2, L3, L4: Layer
- M: Statormittelpunkt

## Patentansprüche

1. Stator (1) für eine elektrische Maschine (100), umfassend eine erste Stirnseite (7), eine gegenüberliegende zweite Stirnseite (9) und eine Vielzahl von Pins (22, 23, 24, 25), die auf konzentrischen Kreisen mit unterschiedlichen Abständen zu einem Statormittelpunkt (M) in Nuten (51 - 58, 71 - 78, 91
- 98) im Stator (1) angeordnet sind, und jeder konzentrische Kreis einen Layer (L1, L2, L3, L4) bildet, wobei
- der Stator (1) eine Vielzahl von Windungen (41, 42) aufweist, die sich über den gesamten Umfang des Stators (1) erstrecken und dabei eine Teilspule bilden,
- jeweils vier Pins (22, 23, 24, 25) in unterschiedlichen Layer (L1, L2, L3, L4) miteinander seriell verbunden sind und eine erste der Windungen (41) bilden,
- sich ein erster Pin (25) der ersten Windung (41) in einer ersten Nut (53) im ersten Layer (L1) befindet,
- sich ein zweiter Pin (24) der ersten Windung (41) in einer zweiten Nut (94) im zweiten Layer (L2) befindet und mit dem ersten Pin (25) auf der zweiten Stirnseite (9) mittels einer ersten Verbindungsart (61) verbunden ist, wobei die zweite Nut (94) einen ersten radialen Abstand (13) in einer ersten Umfangsrichtung des Stators (1) zu der ersten Nut (53) aufweist,
- sich ein dritter Pin (23) der ersten Windung (41) in der ersten Nut (53) im vierten Layer (L4) befindet und mit dem zweiten Pin (24) auf der ersten Stirnseite (7) mittels einer zweiten Verbindungsart (62) verbunden ist,
- sich ein vierter Pin (22) der ersten Windung (41) in der zweiten Nut (94) im dritten Layer (L3) befindet und mit dem dritten Pin (23) auf der zweiten Stirnseite (9) mittels einer dritten Verbindungsart (63) verbunden ist,
- der vierte Pin (22) in der zweiten Nut (94) mit einem fünften Pin (26) im ersten Layer (L1) in einer dritten Nut (55) mittels einer vierten Verbindungsart (64) verbunden ist und zwischen der zweiten Nut (94) und der dritten Nut (55) ein zweiter Abstand (19) liegt, der größer als der erste Abstand (13) ist,
- mit dem fünften Pin (26) die serielle Verbindung der im Stator (1) nachfolgenden Pins erneut beginnt und
- sich die erste, zweite und dritte Verbindungsart (61, 62, 63) voneinander unterscheiden.

2. Stator (1) gemäß Anspruch 1, wobei zwei Teilspulen vorgesehen sind, die mittels einer fünften Verbindungsart (65) oder einer sechsten Verbindungsart (66) miteinander verbunden ist und eine Spule (201, 202) bilden.

3. Stator (1) gemäß Anspruch 2, wobei vier Pins einer Spule vier Nuten (92, 94, 96, 98) komplett belegen.

4. Stator (1) gemäß Anspruch 3, wobei der Stator (1) drei Phasen aufweist, wobei jeweils zwei Spulen (201, 202) derart einer der drei Phasen zugeordnet sind, dass sich jeweils zwei Spulen, die einer gleichen Phase zugeordnet sind, in drei benachbarten Nuten (51 - 58, 71 - 78, 91 - 98) befinden und dabei jeweils zwei unterschiedliche Layer der beiden äußeren Nuten (71 - 78, 91 - 98) mit Pins von anderen Phasen belegt sind.

5. Stator (1) gemäß Anspruch 8, wobei je ein Ein- (81, 87, 101, 107, 111, 117) und Ausgang (83, 103, 113, 85, 105, 115) der mindestens zwei Spulen (201, 202) miteinander verbunden ist und die zwei Spulen (201, 202) dadurch parallelgeschaltet sind.

6. Fahrzeug (403) mit einer elektrischen Maschine (401) mit einem Stator (1) gemäß einem der vorherigen Ansprüche.

## Claims

1. Stator (1) for an electric machine (100), comprising a first end face (7), an opposite second end face (9) and a multiplicity of pins (22, 23, 24, 25), which are arranged in concentric circles with different distances from a stator centre point (M) in slots (51-58, 71-78, 91-98) in the stator (1), and each concentric circle forms a layer (L1, L2, L3, L4), wherein
- the stator (1) has a multiplicity of turns (41, 42), which extend over the entire circumference of the stator (1) and thereby form a partial-coil,
- in each case four pins (22, 23, 24, 25) in different layers (L1, L2, L3, L4) are connected to one another in series and form a first of the turns (41),
- a first pin (25) of the first turn (41) is located in a first slot (53) in the first layer (L1),
- a second pin (24) of the first turn (41) is located in a second slot (94) in the second layer (L2) and is connected to the first pin (25) on the second end face (9) by means of a first type of connection (61), wherein the second slot (94) is at a first radial distance (13) from the first slot (53) in a first circumferential direction of the stator (1),
- a third pin (23) of the first turn (41) is located in the first slot (53) in the fourth layer (L4) and is connected to the second pin (24) on the first end face (7) by means of a second type of connection (62),
- a fourth pin (22) of the first turn (41) is located in the second slot (94) in the third layer (L3) and is connected to the third pin (23) on the second end face (9) by means of a third type of connection (63),
- the fourth pin (22) in the second slot (94) is connected to a fifth pin (26) in the first layer (L1) in a third slot (55) by means of a fourth type of connection (64) and there is a second distance (19) between the second slot (94) and the third slot (55), the second distance being greater than the first distance (13),
- the series connection of the subsequent pins in the stator (1) begins again with the fifth pin (26), and
- the first, the second and the third type of connection (61, 62, 63) differ from one another.

2. Stator (1) according to Claim 1, wherein two partial-coils are provided, which are connected to one another by means of a fifth type of connection (65) or a sixth type of connection (66) and form a coil (201, 202).

3. Stator (1) according to Claim 2, wherein four pins of a coil completely occupy four slots (92, 94, 96, 98).

4. Stator (1) according to Claim 3, wherein the stator (1) has three phases, wherein in each case two coils (201, 202) are assigned to one of the three phases in such a way that in each case two coils, which are assigned to the same phase, are located in three adjacent slots (51-58, 71-78, 91-98) and thus in each case two different layers of the two outer slots (71-78, 91-98) are occupied by pins of other phases.

5. Stator (1) according to Claim 8, wherein a respective input (81, 87, 101, 107, 111, 117) and a respective output (83, 103, 113, 85, 105, 115) of the at least two coils (201, 202) are connected to one another and the two coils (201, 202) are connected in parallel as a result.

6. Vehicle (403) having an electric machine (401) with a stator (1) according to one of the preceding claims.

## Revendications

1. Stator (1) pour une machine électrique (100), comprenant une première face d'extrémité (7), une deuxième face d'extrémité opposée (9) et une pluralité d'épingles (22, 23, 24, 25) qui sont agencées sur des cercles concentriques à différentes distances d'un centre de stator (M) dans des encoches (51-58, 71-78, 91-98) dans le stator (1), et chaque cercle concentrique forme une couche (L1, L2, L3, L4),
- le stator (1) possédant une pluralité de spires (41, 42) qui s'étendent sur toute la circonférence du stator (1) et forment ainsi une bobine partielle,
- quatre épingles (22, 23, 24, 25) étant respectivement reliées en série les unes aux autres dans différentes couches (L1, L2, L3, L4) et formant une première des spires (41),
- une première épingle (25) de la première spire (41) se trouvant dans une première encoche (53) dans la première couche (L1),
- une deuxième épingle (24) de la première spire (41) se trouvant dans une deuxième encoche (94) dans la deuxième couche (L2) et étant reliée à la première épingle (25) sur la deuxième face d'extrémité (9) au moyen d'un premier type de connexion (61), la deuxième encoche (94) présentant une première distance radiale (13) dans une première direction circonférentielle du stator (1) par rapport à la première encoche (53),
- une troisième épingle (23) de la première spire (41) se trouvant dans la première encoche (53) dans la quatrième couche (L4) et étant reliée à la deuxième épingle (24) sur la première face (7) au moyen d'un deuxième type de connexion (62),
- une quatrième épingle (22) de la première spire (41) se trouvant dans la deuxième encoche (94) dans la troisième couche (L3) et étant reliée à la troisième épingle (23) sur la deuxième face (9) au moyen d'un troisième type de connexion (63),
- la quatrième épingle (22) dans la deuxième encoche (94) étant reliée à une cinquième épingle (26) dans la première couche (L1) dans une troisième encoche (55) au moyen d'un quatrième type de connexion (64) et une deuxième distance (19) se trouvant entre la deuxième encoche (94) et la troisième encoche (55), laquelle est supérieure à la première distance (13),
- la connexion en série des épingles suivantes dans le stator (1) recommençant avec la cinquième épingle (26) et
- les premier, deuxième et troisième types de connexion (61, 62, 63) étant différents les uns des autres.

2. Stator (1) selon la revendication 1, deux bobines partielles étant prévues, lesquelles sont reliées entre elles au moyen d'un cinquième type de connexion (65) ou d'un sixième type de connexion (66) et qui forment une bobine (201, 202).

3. Stator (1) selon la revendication 2, quatre épingles d'une bobine occupant complètement quatre encoches (92, 94, 96, 98).

4. Stator (1) selon la revendication 3, le stator (1) possédant trois phases, deux bobines (201, 202) étant respectivement associées à l'une des trois phases de telle sorte que deux bobines respectives qui sont associées à une même phase se trouvent dans trois encoches (51 - 58, 71 - 78, 91 - 98) voisines et que deux couches respectives des deux encoches extérieures (71 - 78, 91 - 98) sont occupées par des épingles d'autres phases.

5. Stator (1) selon la revendication 8, une entrée (81, 87, 101, 107, 111, 117) et une sortie (83, 103, 113, 85, 105, 115) des au moins deux bobines (201, 202) étant à chaque fois reliées entre elles et les deux bobines (201, 202) étant ainsi connectées en parallèle.

6. Véhicule (403) comprenant une machine électrique (401) avec un stator (1) selon l'une des revendications précédentes.
